# EUROPÄISCHE PATENTANMELDUNG

(11) **EP 2 980 354 A1**
(43) Veröffentlichungstag der Anmeldung: **03.02.2016**
(21) Anmeldenummer: 14179075.8
(22) Anmeldetag: 30.07.2014
(51) Int. Cl.: F01D 5/06, F16B 39/02, F16B 41/00

(54) **Läufer für eine Gasturbine und zugehörige Gasturbine**

(71) Anmelder: Siemens Aktiengesellschaft, 80333 München (DE)
(72) Erfinder: Dungs, Sascha, 46485 Wesel (DE); Hoell, Harald, 63607 Wächtersbach (DE); Kolk, Karsten, 45479 Mülheim a.d. Ruhr (DE); Lange, Marc, 50737 Köln (DE); Schröder, Peter, 45307 Essen (DE); Springborn, Dirk, 12203 Berlin (DE); Veitsman, Vyacheslav, 45879 Gelsenkirchen (DE)

(57) **Zusammenfassung**

Ein Läufer (1) für eine Gasturbine wird angegeben, der eine einfach herstellbare und effektive Verdrehsicherung für eine Mutter (10) umfasst, die auf einer Welle (2) oder einem Zuganker (6) des Läufers (1) aufgeschraubt ist. Auf die Welle (2) bzw. den Zuganker (6) ist mit Abstand zu der Mutter (10) ein Sicherungsring (25) aufgeschraubt. Der Sicherungsring (25) ist mit der Mutter (10) in Axialrichtung (A) verspannt, so dass die Mutter (10) relativ zu der Welle (2) bzw. dem Zuganker (6) gegen Verdrehen gesichert ist.

## Beschreibung

Die Erfindung bezieht sich auf einen Läufer für eine Gasturbine. Die Erfindung bezieht sich weiterhin auf eine Gasturbine, die den Läufer umfasst.

Ein Läufer (Rotor) einer Gasturbine besteht üblicherweise aus einem mehrstufigen Verdichterteil sowie aus einem mehrstufigen Turbinenteil, wobei Verdichterteil und Turbinenteil auf einer gemeinsamen Welle gelagert sind. In einer herkömmlichen Bauform umfassen sowohl Verdichterteil als auch Turbinenteil jeweils ein Paket von Läuferscheiben. Beide Scheibenpakete sind über eine mittlere Hohlwelle miteinander verbunden und über einen gemeinsamen zentralen Zuganker verspannt.

Zur Montage eines derartigen Läufers wird zunächst das Scheibenpaket des Verdichterteils inklusive der Hohlwelle montiert und mit einer Spannvorrichtung gegenüber dem Zuganker verspannt. Anschließend wird eine (Schrauben-)Mutter auf den Zuganker aufgeschraubt. Die Mutter ist dabei als eine Stützscheibe ausgebildet, die die Hohlwelle radial gegen den Zuganker abstützt. Zur Montage des Läufers wird die Mutter derart auf den Zuganker aufgeschraubt, dass diese an einem innenseitigen Axialanschlag der mittleren Hohlwelle anliegt und die Vorspannung hält. Nachfolgend werden die Turbinenscheiben montiert, worauf letztlich der gesamte Läufer mit Hilfe einer Spannmutter verspannt wird, die am turbinenseitigen Ende auf den Zuganker aufgeschraubt wird.

Im Zuge der Montage des Turbinenteils löst sich jedoch durch Dehnung des Zugankers die Mutter von dem Axialanschlag, wodurch sich die Mutter (bzw. Stützscheibe) im Betrieb des Läufers gegenüber dem Zuganker verdrehen kann.

Der Erfindung liegt die Aufgabe zugrunde, eine Verdrehung einer auf eine Welle oder einen Zuganker eines Läufers einer Gasturbine aufgeschraubten Mutter auf einfache und effektive Weise zu verhindern.

Diese Aufgabe wird erfindungsgemäß gelöst durch die Merkmale des Anspruchs 1. Vorteilhafte und teils für sich erfinderische Ausführungsformen und Weiterentwicklungen der Erfindung sind in den Unteransprüchen und der nachfolgenden Beschreibung dargelegt.

Der erfindungsgemäße Läufer für eine Gasturbine umfasst eine Welle oder einen axial geführten Zuganker, sowie eine auf der Welle bzw. dem Zuganker aufgeschraubte (Schrauben-)Mutter. Auf die Welle bzw. den Zuganker ist mit Abstand zu der Mutter ein Sicherungsring aufgeschraubt. Der Sicherungsring ist im Montagezustand mit der Mutter in Axialrichtung verspannt, so dass die Mutter relativ zu der Welle bzw. dem Zuganker gegen Verdrehen gesichert ist.

Vorteilhafterweise stellt der aufgeschraubte Sicherungsring eine vergleichsweise einfach herstellbare und dennoch effektive Verdrehsicherung für eine Mutter dar. Zudem ist der Sicherungsring einfach montierbar. Weiterhin ist der Sicherungsring zerstörungsfrei demontierbar, so dass sowohl die Mutter als auch der Sicherungsring vorteilhaft wieder verwendbar sind. Hierdurch können Herstellungs- und Wartungskosten für den Läufer bzw. die Gasturbine reduziert werden.

Im Sinne einer rationellen Herstellung haben der Sicherungsring und die Mutter bevorzugt einen identischen Innengewindedurchmesser und sitzen zueinander axialversetzt auf demselben Außengewinde der Welle bzw. des Zugankers. Unterschiedliche Dimensionierungen sind im Rahmen der Erfindung jedoch auch möglich.

Prinzipiell ist es im Rahmen der Erfindung denkbar, dass der Sicherungsring und die Mutter zur axialen Verspannung durch ein Spannelement, beispielsweise ein Federelement, voneinander abgedrückt werden. Vorzugsweise ist im Rahmen der Erfindung jedoch vorgesehen, dass Sicherungsring und Mutter durch eine axiale Zugkraft miteinander verspannt werden.

Dabei ist in besonders bevorzugter Ausführungsform vorgesehen, dass der Sicherungsring und die Mutter mit mindestens zwei Spannschrauben zueinander verspannt sind. Die zwei (oder mehr) Spannschrauben sind dabei vorzugsweise gleichmäßig über den Umfang des Sicherungsrings verteilt. Insbesondere ist jede Spannschraube jeweils durch eine (glattwandige) Bohrung des Sicherungsrings durchgeführt und in einer mit der Bohrung fluchtenden Gewindebohrung der Mutter verschraubt.

Vorzugsweise ist jede der Spannschrauben mit einer herkömmlichen Schraubensicherung gegen Loslösen gesichert, beispielsweise durch Unterlegen einer Federscheibe oder eines Keilsicherungsscheibenpaars oder ähnlichem.

In einer besonders montagefreundlichen Ausführungsform ist die Verwendung eines Arretierungsstifts vorgesehen, der in fluchtenden Bohrungen des Sicherungsrings bzw. der Mutter einliegt, so dass die Drehstellung des Sicherungsrings gegenüber der Mutter festgelegt ist.

In bevorzugter Ausführungsform ist die Mutter als eine auf dem Zuganker sitzende Stützscheibe ausgebildet, die zur radialen Verstrebung einer koaxial mit dem Zuganker ausgerichteten Hohlwelle gegenüber dem Zuganker dient.

Insbesondere umfasst der Läufer dabei einen Verdichterteil, wobei die Stützscheibe vorzugsweise derart auf den Zuganker aufgeschraubt ist, dass sie im Zuge der Läufermontage zur axialen Verspannung des Verdichterteils an einem Axialanschlag der Hohlwelle anstößt.

Vorzugsweise ist die Stützscheibe mit in Axialrichtung durchgehenden Ausnehmungen zur Führung von Kühlluft versehen. Nachfolgend wird ein Ausführungsbeispiel der Erfindung anhand einer Zeichnung näher erläutert. Darin zeigen:
- FIG 1: in einer schematischen Längsschnittdarstellung einen Ausschnitt eines Läufers einer Gasturbine, wobei der Läufer eine auf einem Zuganker verschraubte Stützscheibe umfasst,
- FIG 2: in perspektivischer Ansicht die Stützscheibe, die mit Hilfe eines Sicherungsrings auf dem Zuganker verdrehgesichert ist,
- FIG 3: die Stützscheibe gemäß FIG 2 in einer Schnittdarstellung, in der zwei Spannschrauben erkennbar sind, mit deren Hilfe der Sicherungsring gegenüber der Stützscheibe axial-verspannt ist, und
- FIG 4: die Stützscheibe gemäß FIG 2 in einer zweiten Schnittdarstellung, in der ein Arretierungsstift erkennbar ist.

Einander entsprechende Teile sind in allen Figuren stets mit den gleichen Bezugszeichen versehen.

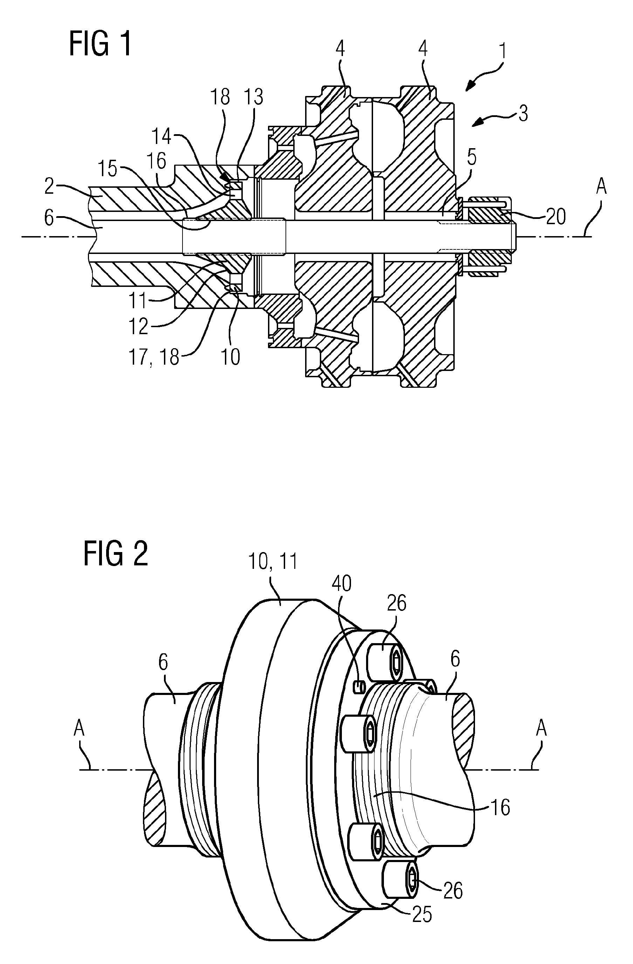

FIG 1 zeigt einen Ausschnitt eines Läufers 1 für eine Gasturbine. Der Läufer 1 umfasst einen (nicht explizit dargestellten) Verdichterteil, eine mittlere Hohlwelle 2 (in der Darstellung links) sowie einen Turbinenteil 3 (in der Darstellung rechts). Im Montagezustand des Läufers 1 ist zwischen Verdichterteil und Turbinenteil 3 eine Brennkammer angeordnet.

Der Turbinenteil 3 umfasst mehrere Turbinenscheiben 4, mit jeweils einer zentralen Bohrung 5, wobei durch die Bohrungen 5 ein zentraler Zuganker 6 entlang einer Achse A durchgeführt ist. Der Zuganker 6 ist auch durch die Hohlwelle 2 koaxial durchgeführt. Verdichterscheiben (nicht dargestellt), Hohlwelle 2 und Turbinenscheiben 4 sind mit Hilfe des Zugankers 6 in Axialrichtung zu einer Einheit miteinander verspannt. Um die Hohlwelle 2 im Betrieb des Läufers 1 gegen Schwingungen zu schützen, ist eine als Stützscheibe 10 ausgebildete Mutter vorgesehen. Die Stützscheibe 10 umfasst eine auf dem Zuganker 6 sitzende Nabe 11, von der ein Scheibenkörper 12 radial abragt. Mit einer Umfangsfläche 13 des Scheibenkörpers 12 liegt die Stützscheibe 10 an einer Innenwand der Hohlwelle 10 an, und bildet somit eine starre Verbindung zwischen Hohlwelle 2 und Zuganker 6. In den Scheibenkörper 12 sind axial durchgehende Ausnehmungen 14 zur Kühlluftführung eingebracht.

Bei der Montage des Läufers wird die Stützscheibe 10 als Spannmutter eingesetzt. Im Zuge der Läufermontage wird zunächst der Verdichterteil vormontiert und mit Hilfe einer Spannvorrichtung in Axialrichtung vorgespannt. Anschließend wird die Stützscheibe 10 mit einer zentralen Gewindebohrung 15 der Nabe 11 auf ein zugeordnetes Außengewinde 16 des Zugankers 6 aufgeschraubt, so dass die Stützscheibe 10 mit einem Außenrand 17 an einem innenseitigen Axialanschlag 18 der Hohlwelle 2 anschlägt, wodurch die axiale Vorspannung gehalten wird. Im weiteren Verlauf werden die Turbinenscheiben 4 montiert. Der gesamte Läufer 1 wird schließlich in herkömmlicher Weise mit einer Spannmutter 20 verspannt, die am turbinenseitigen Ende des Zugankers 6 aufgeschraubt wird. Durch eine hieraus resultierende Längenänderung des Zugankers 6 löst sich die Stützscheibe 10 von dem Axialanschlag 18, so dass eine für eine verdrehsichere Schraubenverbindung notwendige Axialspannung nicht mehr gegeben ist.

Um die Stützscheibe 10 dennoch im Betrieb des Läufers 1 gegen Verdrehen zu sichern, ist der Stützscheibe 10 eine Verdrehsicherung zugeordnet, deren Aufbau im Folgenden erläutert wird.

FIG 2 zeigt einen Teil des Zugankers 6, auf dem die Stützscheibe 10 sitzt, wobei der Übersichtlichkeit halber von der Stützscheibe 10 nur deren Nabe 11 dargestellt ist. Gemäß der Darstellung ist der Durchmesser des Zugankers 6, in dem Bereich, in dem das Außengewinde 16 eingeschnitten ist, in einer radialen Stufe erweitert. Auf das Außengewinde 16 ist zusätzlich zu der Stützscheibe 10 ein Sicherungsring 25 mit Abstand zu der Stützscheibe 10 aufgeschraubt, so dass zwischen Nabe 11 und Sicherungsring 25 ein Spalt gebildet ist. Mit Hilfe von sechs gleichmäßig über den Umfang verteilten Spannschrauben 26 ist der Sicherungsring 25 mit der Stützscheibe 10 in Axialrichtung A verspannt.

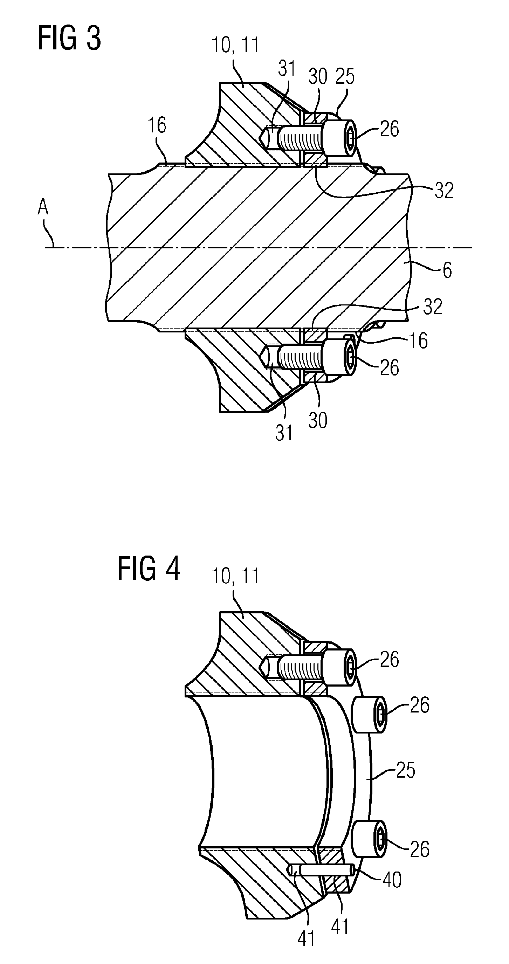

Dem Axialschnitt gemäß FIG 3 ist zu entnehmen, dass dabei jede Spannschraube 26 in einer glattwandigen, durchgängigen Bohrung 30 des Sicherungsrings 25 einliegt und in einer korrespondierenden, in die Nabe 11 eingebrachten Gewindebohrung 31 verschraubt ist. Jede Gewindebohrung 31 ist dabei als Sackloch ausgeführt. Sowohl die Bohrungen 30 als auch die Gewindebohrungen 31 sind jeweils achsparallel ausgerichtet. FIG 3 ist außerdem zu entnehmen, dass der Sicherungsring 25 mit einem zentralen Innengewinde 32 auf das Außengewinde 16 aufgeschraubt ist.

FIG 4 zeigt einen abgewinkelten Axialschnitt durch den Verbund aus Stützscheibe 10 und Sicherungsring 25 gemäß FIG 2, wobei der Zuganker hier nicht dargestellt ist. Ausweislich FIG 4 liegt ein Arretierungsstift 40 passgenau in einem Paar korrespondierender Bohrungen 41 der Stützscheibe 10 bzw. des Sicherungsrings 25 ein. Die Bohrungen 41 sind jeweils ohne Gewinde ausgeführt. Der Arretierungsstift 40 dient dazu, ein Verdrehen des Sicherungsrings 25 gegenüber der Stützscheibe 10 zu verhindern.

Zur Montage der Verdrehsicherung wird zunächst die Stützscheibe 10 vom turbinenseitigen Ende (in den Darstellungen jeweils rechts) des Zugankers 6 aus auf das Außengewinde 16 aufgeschraubt. Anschließend wird der Sicherungsring 25 (ebenfalls vom turbinenseitigen Ende her) auf das Außengewinde 16 aufgeschraubt, wobei zwischen der Stützscheibe 10 bzw. deren Nabe 11 und dem Sicherungsring 25 ein definierter Spalt verbleibt.

Beim Aufschrauben ist der Sicherungsring 25 soweit zu drehen, dass die Bohrungen 30 mit den korrespondierenden Gewindebohrungen 31 fluchten. Die Spannschrauben 26 werden durch die Bohrungen 30 eingeführt und in die Gewindebohrungen 31 eingeschraubt. Optional kann der Arretierungsstift 40 in die entsprechenden Bohrungen 41 eingesetzt werden, so dass der Sicherungsring 25 gegenüber der Stützscheibe 10 bezüglich seiner Drehstellung arretiert ist. Hierdurch wird die Montage der Spannschrauben 26 erleichtert.

Indem einander gegenüberliegende Spannschrauben 26 jeweils paarweise "über Kreuz" angezogen werden, werden die Stützscheibe 10 und der Sicherungsring 25 zueinander verspannt. Die Schraubenverbindung der Stützscheibe 10 auf dem Zuganker 6 unterliegt somit auch nach der Montage des Turbinenteils 3 einer Axialspannung, so dass ein Verdrehen der Stützscheibe 10 gegenüber dem Zuganker 6 im Betrieb des Läufers 1 verhindert wird.

Optional sind die Spannschrauben 26 durch handelsübliche Schraubensicherungen gegen Lösen im Betrieb gesichert.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

## Patentansprüche

1. Läufer (1) für eine Gasturbine mit einer Welle (2) oder einem axial geführten Zuganker (6) sowie mit einer auf der Welle (2) bzw. dem Zuganker (6) aufgeschraubten Mutter (10),
- wobei auf die Welle (2) bzw. den Zuganker (6) mit Abstand zu der Mutter (10) ein Sicherungsring (25) aufgeschraubt ist, und
- wobei der Sicherungsring (25) mit der Mutter (10) in Axialrichtung (A) verspannt ist, so dass die Mutter (10) relativ zu der Welle (2) bzw. dem Zuganker (6) gegen Verdrehen gesichert ist.

2. Läufer (1) nach Anspruch 1,
wobei der Sicherungsring (25) und die Mutter (10) mit Hilfe von mindestens zwei Spannschrauben (26) verspannt sind.

3. Läufer (1) nach Anspruch 2,
wobei jede Spannschraube (26) durch eine Bohrung (30) des Sicherungsrings (25) geführt ist, und in eine mit der Bohrung (30) fluchtende Gewindebohrung (31) der Mutter (10) eingeschraubt ist.

4. Läufer (1) nach einem der Ansprüche 1 bis 3,
mit einem Arretierungsstift (40), der in einem Paar fluchtender Bohrungen (41) des Sicherungsrings (25) bzw. der Mutter (10) einliegt, so dass die Drehstellung des Sicherungsrings (25) gegenüber der Mutter (10) festgelegt ist.

5. Läufer (1) nach einem der Ansprüche 2 bis 4,
wobei jede Spannschraube (26) mit einer Schraubensicherung gegen Loslösen gesichert ist.

6. Läufer (1) nach einem der Ansprüche 1 bis 5,
wobei die Mutter (10) als auf dem Zuganker (6) sitzende Stützscheibe ausgebildet ist, die zur radialen Abstützung einer koaxial mit dem Zuganker (6) ausgerichteten Hohlwelle (2) gegenüber dem Zuganker (6) dient.

7. Läufer (1) nach Anspruch 6,
mit einem Verdichterteil, wobei die Stützscheibe (10) derart auf den Zuganker (6) aufgeschraubt ist, dass sie bei der Läufermontage zur axialen Verspannung des Verdichterteils an einem Axialanschlag (18) der Hohlwelle (2) anstößt.

8. Läufer (1) nach Anspruch 6 oder 7,
wobei die Stützscheibe (10) mit in Axialrichtung durchgehenden Ausnehmungen (14) zur Führung von Kühlluft versehen ist.

9. Gasturbine mit einem Läufer (1) gemäß einem der Ansprüche 1 bis 8.
